# EUROPEAN PATENT APPLICATION

(11) **EP 2 087 947 A2**
(43) Date of publication of application: **12.08.2009**
(21) Application number: 09152156.7
(22) Date of filing: 05.02.2009
(51) Int. Cl.: B09C 1/08, B09B 3/00, C02F 11/00, C04B 18/02

(54) **Method for reclaiming soil, sediment and sludge dredged from watercourses contaminated by heavy metals and by dangerous and toxic organic compounds**

(30) Priority: 08.02.2008 IT VE20080010
(71) Applicant: Depuracque Sviluppo S.R.L., 30030 Salzano (IT); Depuracque Servizi S.R.L., 30030 Salzano (IT)
(72) Inventor: Pippa, Roberto, 30033, Noale (IT); Tonolo, Giorgio, 30035, Mirano (IT); Levorato, Nicola, 30035, Mirano (IT)
(74) Representative: Piovesana, Paolo

(57) **Abstract**

A method for reclaiming soil, sediment and sludge dredged from watercourses contaminated by heavy metals and by dangerous and toxic organic compounds **characterised in that** the soil, sediment or sludge with a water content variable from 5% by weight to 60% by weight is subjected to the following steps:
- mixing and homogenizing at a temperature not exceeding 140°C for a time not exceeding two hours with cement binders in a quantity variable from 5% to 50% by weight of the soil, sediment or sludge, to obtain a flowable granular powder with an average diameter between 0,1 mm and 4 mm which is compacted mechanically into briquettes or pellets with a maximum volume of 500 cm³,
- a first curing step for cement setting and dehydration of the briquettes for a maximum time of nine days to attain a residual moisture content less than 15%,
- a second curing step for a maximum time of twentyeight days.

## Description

The present invention relates to a method for reclaiming soil, sediment and sludge dredged from watercourses contaminated by heavy metals and by dangerous and toxic organic compounds.

The quantities, in terms of millions of tons of soil and sediment, referred to the numerous "contaminated sites" to be reclaimed, highlight the environmental and economic importance of providing treatment technologies which enable maximum efficiency and effectiveness to be obtained at lesser cost. Recent environmental regulations are aimed at technologies which enable the final products to be used in the reclaimed site, while preventing as far as possible their dumping.

Various technologies are currently available for treatment by inerting and solidifying with cement binders to reduce transfer of heavy metals to water eluates. Some technologies mix sludge of high water content (greater than 50%) with large cement quantities (up to a 1:1 weight ratio), to obtain a mixture which by casting in moulds is formed into large monolithic blocks which are generally fed to dumping. Other technologies propose to dehydrate the soil or sediment to a maximum of 20% of its initial water content, by using complex and costly pretreatment (filtration, oven drying, etc.), to then mix it with cement and aqueous solutions of superfluidifying additives in mixers and rotary disc granulators: in this case, water has to be added during granulation with consequent economic inefficiency.

Other technologies propose to mix the sludge of high water content (>50%) with aqueous solutions of phosphoric acid or its alkaline salts, with consequent development of carbon dioxide and sulphuric acid, followed by natural dehydration of the sludge (frothing sludge). This dehydration step requires lengthy times in large tanks of high surface area, to finally calcine and desorb at high temperature (550-750°C) in order to produce fine powder (of average diameter about 10 thousandth of a millimetre), which is difficult to reuse and handle.

To remove organic components and mercury, the most effective technology for low contaminant residue levels in the final product is thermal desorption at medium-high temperature (400-650°C), but even this requires pretreating the soil and/or sludge to reduce the initial water to at least 20% in order not to raise energy costs; moreover the operation produces fine powder. In this respect, as in the previous case regarding sediment sludge containing large quantities of silt and clay, the fine dust particles are airborne and give rise to considerable environmental and furnace management problems. Another technology for removing only the organic compounds is to treat the soil or sludge, again containing large initial water quantities (> 50%), with an organic hydrocarbon solvent; however again the presence of large quantities of fine silt and clay particles suspended in the water makes their separation and solvent contact difficult and costly, hence requiring the use of solid/liquid separation equipment such as decanters, filter presses and centrifuges, with limits on production. This is normally repeated in 3-5 step cycles to always give a sludge with the contaminants removed, but which is difficult to reuse in situ.

To improve the various available technologies a new very flexible and efficient process is proposed, which is suitable for the variability of the initial water present in soil, sediment and sludge to be reclaimed, in particular in "pilable" sludge which is normally obtained after dredging and decanting in a tank.

The method for reclaiming soil, sediment and sludge dredged from watercourses contaminated by heavy metals and by dangerous and toxic organic compounds is characterised as described in claim 1.

A preferred embodiment of the present invention and some variants thereof are described hereinafter.

The method of the invention comprises an initial step in which the dredged soil, sediment or sludge (a) contaminated by heavy metals and by dangerous and toxic organic compounds containing:
- an initial water quantity (calculated by determining the dry residue at 105°C by analysis) variable from 5% to 60% by weight (preferably 30%-50%)
- solids from 40% to 95% (preferably 70%-50%) in the form of sand, lime, clay, alkaline earth silicates and carbonates, including up to 100% of clay and/or silt,
are mixed in batch or continuous mixers with cement binders (b), in quantities variable from 5% to 50% by weight (preferably 20%) of (a). The binders consist of cement of the various types used in building), and lime (in the various types used in building) which can vary from 0%) to 10% by weight of (a) expressed as calcium oxide.

Auxiliary additives typical of cement conglomerates used in building such as silica flour, alkaline silicates, hydraulic setting accelerants, fluidifiers, superfluidifers etc. can be added to the cement binder in a quantity from 0% to 3% of (b).

If on termination of this step the homogenized mixture is not in the form of flowable granular powder but is still pasty and spreadable, a thermally accelerated "cement setting" step is carried out in the same mixer or external to it, by indirectly heating in a subsequent suitable apparatus to a temperature between 60° and 140°C, preferably 70°-80°C, for a time from 15 to 20 minutes, preferably 30 minutes, to obtain flowable powder free of aeriform fine dust, with a mean diameter from 0.1 to 4 mm, preferably 2 mm.

The flowable powder is fed by a variable throughput screw feeder to a mechanical compactor, preferably a continuous compactor with cellular Cylindrical rings counter-rotating at variable r.p.m. and compression, in which the cell shape determines the form and dimension of a product in the form of "briquettes". On leaving the compactor, these pass onto a vibroscreen with mesh size less than the briquette dimension. The "fines" collect on the under-screen and are recycled to the feed screw, while the briquettes on the sieve are fed by belt or pneumatic feeders to a storage vessel for initial curing and dehydration, If shape and reuse requirements mean that a product of defined fragment shape and dimensions is needed, the briquettes can be fed to a mechanical briquette breaker with a grid of the required dimensions to determine the fragment size. The output from the briquette breaker is fed to a vibroscreen in which after separation the fines are fed to the compactor while the fragments are fed to their storage vessel for initial curing.

The initial cement curing and dehydration step can last up to nine days (preferably four) depending on the initial water in the sludge and the cement binder quantity; rehydration can be done with water and/or aqueous solutions of consoliants, hardeners, inorganic or polymeric waterproofers such as sodium silicate, acrylic polymers etc. normally used in building for plaster or cement articles. The products are adsorbed, after which the briquettes are dried by controlled atmospheric air dehydration to attain a residue at 105°C of 85%-95% (preferably 90%); at the end of this step a solid non-friable "briquette" or "fragment" product is obtained, free from fine powder and of low moisture, hence achieving important technological improvements, with low energy consumption.

If the objective of reclaiming is limited to just inerting heavy metals, the technological scheme is completed by a curing completion step. This can be achieved in the storage vessels or in heaps, and consists of "seasoning" at ambient temperature, with possible water additions for 28 days, to achieve best characteristics of compression resistance (force at breaking peak) and least metal transfer into water eluates, in accordance with current regulations.

If instead the reclamation is also to include removal of dangerous organic compounds and mercury, the "briquettes or fragments" leaving the first curing step are fed to a furnace, for example a rotary furnace directly or indirectly heated, with condensation of the desorbed vapours. The furnace operates at medium-low temperatures of 300-450°C (preferably 400°C) for a residence time from 15 minutes to 60 minutes (preferably 30 minutes) under maximum efficiency conditions, in that the initial moisture in the briquettes can be less than 10%, practically with the absence of fine powder; this considerably simplifies downstream equipment for environmental control of emissions. The organic contaminant removal levels are similar to those achieved with normal technologies operating with powder.

Alternatively, if it is not necessary to remove mercury but only dangerous and harmful organic compounds, the briquettes leaving the initial curing step can be subjected to extraction with organic solvent; applying this technology to the briquettes or fragments means that after dehydration, these are able to absorb from 10% to 40% by weight of a low boiling organic solvent (temperature less than 100°C) while maintaining their shape and mechanical strength (the solvent and the water do not disintegrate the compounds formed with the cement). The briquettes are therefore immersed in the solvent, in a solid/solvent weight ratio from 1/1 to 1/3 (preferably 1/2) at temperatures variable from ambient (20°C) to the solvent boiling point (preferably 20°C) for a contact time from 1 hour to 5 hours (preferably 2 hours) in vessels with slow mixing stirrers or semi-continuous columns. The solvent containing the dangerous organic compounds is then separated by simple passage through a grid, and fed to the distillation section, the briquettes or fragments being dried by inert gas (nitrogen) flow or by steam or in heaps exposed to air. The evaporated solvent is recovered by condensation, and the briquettes are subjected to repeated successive extraction steps from 2 to 5 times (preferably 3) to remove the contaminants to the desired residual concentration. The technology enables the contaminants to be removed without complex equipment and provides a dry solid product (moisture content between 5% and 10%) practically free of the solvent used, with good mechanical characteristics ready for reuse on the site to be reclaimed.

The following examples describe the process together with the main characteristics obtained, for the purpose of reclamation and reuse.

### EXAMPLES

Example 1: 10,000 g of discarded industrial soil, contaminated by heavy metals, with a dangerous arsenic content as indicated in Tab, 1, having an initial water content of 15%, were mixed with 500 g of lime (calcium oxide) and then with 1900 g of 42.5R Portland cement to obtain a flowable granular powder formed of small particles of 2 mm average diameter. Six such preparations were prepared, then mixed together an d homogenized to obtain a sample of 74 kg.

After 24 hours the product was fed through a screw hopper and a pilot compactor with cellular rollers, to obtain compacted briquettes as in photograph 1.

The briquettes were subjected after three days to after-treatment with an aqueous 5% sodium silicate solution for 24 hours, washed with water and left to dry and cure in air for one month,

table 2 shows the results of water transfer tests for 24 hours as prescribed by standards, compared with limits in relation to subterranean waters and to their reuse.

**Table 1 Content of heavy metal contaminants in the soil (Method: EPA3050B1996 + EPA6010C2000)**

| Metals | m.u. | Result | Law decree 152/06 Table 1 attachment 5 part IV heading V Column B ind.al use | Law decree 152/06 Table 1 attachment 5 part IV heading V Column A residential use |
|---|---|---|---|---|
| Mercury | mg/kg dm | <0.5 | 5 | 1 |
| Arsenic | mg/kg dm | 4441 | 50 | 20 |
| Chromium tot | mg/kg dm | 149 | 800 | 150 |
| Cadmium | mg/kg dm | 2.4 | 15 | 2 |
| Lead | mg/kg dm | 391 | 1000 | 100 |
| Copper | mg/kg dm | 214 | 600 | 120 |

**Tab.2 Transfer to water 24 ore (Method: UNI 10802 - 2004; UNI EN 12457-2-20040- EPA 6010A 2000)**

| Metals | m.u. | Ex.1 | Untreated soil | Law decree 152/06 Table 2 attachment 5 part IV heading V Subterranean water | Attachment 3 D.M. 5 February 1998 |
|---|---|---|---|---|---|
| Mercury | µg/l | <0.5 | <0.5 | 1 | 1 |
| Arsenic | µg/l | 5.8 | 3390 | 10 | 50 |
| Chromium tot. | µg/l | 8.4 | 6 | 50 | 50 |
| Cadmium | µg/l | < 1 | < 1 | 5 | 5 |
| Lead | µg/l | < 1 | <1 | 10 | 50 |
| Copper | µg/l | 8 | 66 | 1000 | 50 |

The efficiency of arsenic transfer blockage, a particular mobile and dangerous element, can be seen. The "briquette" sample was characterised in terms of mechanical properties for the purpose of its reuse as road foundations by determining the California bearing ratio, CBR, determined in accordance with CNR - UNI 10009/63, obtaining for the examined sample a CBR value of 58% greater than the 50% limit set by UNI 1006/23002 for deep stabilized soil layers, denoting overall an acceptable behaviour for the inerted soil, particularly if intended for foundations.

Example 2: 10,000 g of discarded industrial soil, contaminated by heavy metals and hydrocarbons, with an initial water content of 15% (sample T1), were mixed with 2000 g of 42.5R Portland cement for two minutes to obtain a homogeneous granular powder (sample P). After 24 hours the product was fed through a screw hopper and a pilot compactor with cellular rollers, to obtain briquettes as in Example 1. After three days the briquettes were immersed in water for 24 hours, then separated from the water and left to dry in air for one month (sample B).

Table 3 shows the analysis results for heavy metal content (method: EPA 3050B 1996 - EPA6010C2000), hydrocarbon content (method: ISO-TR-111046 1994 met.B), aromatic polycyclic hydrocarbon (APH) content, and polychlorobiphenyl (PCB) content (method: EPA3545A 1998 - EPA 8270D 1998), on the granular powder sample containing cement (sample P) before compaction into briquettes. Table 4 shows the results of the water transfer tests as in Example 1. carried out on sample P and sample B.

**Table 3 Contaminant content of sample P**

| Metals | m.u. | Sample P | Law decree 152/06 Table 1 attachment 5 part IV heading V Column B ind.al use | Law decree 152/06 Table 1 attachment 5 part IV heading V Column A residential use |
|---|---|---|---|---|
| Mercury | mg/kgdm | 4.92 | 5 | 1 |
| Arsenic | mg/kgdm | 2563 | 50 | 20 |
| Cromium tot, | mg/kgdm | 115 | 800 | 150 |
| Cadmium | mg/kgdm | 1.97 | 15 | 2 |
| Lead | mg/kgdm | 213 | 1000 | 100 |
| Copper | mg/kgdm | 205 | 600 | 120 |
| Zinc | mg/kgdm | 292 | 500 | 150 |
| Hydrocarbons | | | | |
| C≤12 | mg/kgdm | 386 | 250 | 10 |
| C>12 | mg/kgdm | 842 | 750 | 50 |
| APH | mg/kgdm | | | |
| Naphthalene | mg/kgdm | 440 | | |
| Pyrene | mg/kgdm | 10.9 | 50 | 5 |
| Benzo(a)anthracene | mg/kgdm | 1.76 | 10 | 0.5 |
| Chrysene | mg/kgdm | < 5 | 50 | 5 |
| Benzo(b)fluoranthene | mg/kgdm | 0.93 | 10 | 0.5 |
| Benzo(k)fluoranthene | mg/kgdm | 0.82 | 10 | 0.5 |
| Benzo(a)pyrene | mg/kgdm | 0.82 | 10 | 0.1 |
| Indeno(123cd)pyrene | mg/kgdm | 0.43 | 5 | 0.1 |
| Dibenzo(a,h)anthracene | mg/kgdm | 0.12 | 10 | 0.1 |
| Benzo(ghi)terylene | mg/kgdm | 0.51 | 10 | 0.1 |
| Dibenzo(a,e)pyrene | mg/kgdm | <0.1 | 10 | 0.1 |
| Dibenzo(a,h)pyrene | mg/kgdm | <0.1 | 10 | 0.1 |
| Dibenzo(a,i)yrene | mg/kgdm | <0.1 | 10 | 0.1 |
| Dibenzo(a,l)pyrene | mg/kgdm | <0.1 | 10 | 0.1 |
| Summation APH (canc) | mg/kgdm | 18.23 | 100 | 10 |
| PCB | mg/kgdm | <0.5 | 5 | 0.06 |

The soil is found to be contaminated particularly with mercury, arsenic (very high values), lead, copper, zinc, hydrocarbons, APH.

**Tab.4 Transfer to water 24 ore.**

| Metals | m.u. | Sample T1 (powder) | Sample P (powder) | Sample B (briquettes) | Law decree. 152/06 Table 2 attachment 5 part IV heading V Subterranean water | Attachment 3 D.M. 5 February 1998 | |
|---|---|---|---|---|---|---|---|
| Mercury | µg/l | <0.2 | <0.2 | < 0.2 | 1 | 1 | |
| Arsenic | µg/l | 3390 | 51 | 10 | 10 | 50 | |
| Chromium tot. | µg/l | 6 | 100 | 26 | 50 | 50 | |
| Cadmium | µg/l | < 1 | < 1 | < 1 | 5 | 5 | |
| Lead | µg/l | <1 | 1.7 | < 1 | 10 | 50 | |
| Copper | µg/l | 660 | 120 | 44 | 1000 | 50 | |
| Zinc | µg/l | < 1 | 2.7 | < 1 | 1000 | 50 | |

With reference to the powder sample it will be noted that compaction into briquettes further reduces transfer values following mass hardening and reduced specific surface, even when the cement quantity is very small.

Example 3: the briquettes prepared in Example 2 were desorbed in a laboratory plant (indirect heating in sand bath heated on a gall ceramic plate) to a maximum temperature of 300°C (temperature from 200°C to 300°C for 30 minutes) (Sample B/Di) and in a muffle furnace at 400°C for 45 minutes (Sample B/Dm), compared with powder (Sample P) desorbed in the muffle furnace at 400°C for 45 minutes (Sample P/D).

The weight loss after desorption was as follows:

| Sample | weight % initial sample as such |
|---|---|
| P/Dm | -18.26 |
| B/Di | -18.3 |
| B/Dm | -18.6 |

The powder sample P has a moisture content of 15.65% (weight loss at 105°C).

After desorption, an analysis was carried out on the samples to determine the content of mercury and organic compounds (hydrocarbons, APH) by the methods of Example 2.
Table 5 shows the results obtained.

**Table 5 Content of organic contaminants and mercury in the thermally desorbed samples.**

| Contaminant | m.u. | INITIAL REFERENCE | DESORBED SAMPLES | | |
|---|---|---|---|---|---|
| | | P (powder as such) | P/Dm powder at 400°C | B/Dm briquettes at 400°C | B/Di briquettes at 300°C |
| Mercury | mg/kgdm | 4.92 | < 0.5 | <0.5 | 0.56 |
| Hydrocarbons | | | | | |
| C<12 | mg/kgdm | 386 | < 5 | < 5 | < 5 |
| C>12 | mg/kgdm | 842 | <10 | <10 | <10 |
| APH | | | | | |
| Naphthalene | mg/kgdm | 440 | <0.5 | <0.5 | <0.5 |
| Pyrene | mg/kgdm | 10.9 | < 5 | < 5 | < 5 |
| Benzo(a)anthracene | mg/kgdm | 1.76 | <0.5 | <0.5 | <0.5 |
| Chrysene | mg/kgdm | < 5 | < 5 | < 5 | < 5 |
| Benzo(b)fluoranthene | mg/kgdm | 0.93 | < 0.5 | < 0.5 | < 0.5 |
| Benzo(k)fluoranthene | mg/kgdm | 0.82 | <0.5 | <0.5 | <0.5 |
| Benzo(a)pyrene | mg/kgdm | 0.82 | <0.1 | <0.1 | <0.1 |
| Indeno(123cd)pyrene | mg/kgdm | 0.43 | < 0.1 | <0.1 | <0.1 |
| Dibenzo(a,h)anthracene | mg/kgdm | 0.12 | < 0.1 | < 0.1 | < 0.1 |
| Benzo(ghi)pesylene | mg/kgdm | 0.51 | < 0.1 | <0.1 | <0.1 |
| Dibenzo(a,e)pyrene | mg/kgdm | <0.1 | <0.1 | < 0.1 | <0.1 |
| Dibenzo(a,h)pirene | mg/kgdm | <0.1 | < 0.1 | <0.1 | < 0.1 |
| Dibenzo(a,i)pyrene | mg/kgdm | < 0.1 | <0.1 | <0.1 | <0.1 |
| Dibenzo(a,l)pyrene | mg/kgdm | <0.1 | <0.1 | <0.1 | < 0.1 |
| Summation APH (canc) | mg/kgdm | 18.23 | <10 | < 10 | <10 |
| PCB | mg/kgdm | <0.5 | <0.5 | < 0.5 | <0.5 |

The results indicate that thermal desorption at medium-high temperatures (300-400°C) by indirect heating results in virtually complete removal of hydrocarbons and of carcinogenic APHs, to the limit of measurement sensitivity of the analytical method, with a residual level definitely below the limit of column A of Law decree 152/2006 relative to soils for residential use (indicated in Tab le 3). The briquettes unexpectedly desorb contaminants such as dust and also maintain their non-crushable compact structure.

Example 4: to check whether desorption efficiency depends on the compaction force, cylindrical pellets (diameter 2 cm, height 1.5 cm) were prepared using a hydraulic press (GABRIELLI - 20 ton minipress - Tital - Kontrol), with pressure variation facility, using for the mould a steel slab with 2 cm diameter cavities and relative punch.

10 g of powder per pellet were loaded.

The mixture was prepared using:
- Soil contaminated with heavy metals and hydrocarbons (sample T2, moisture content 15%): 500g;
- Calcium oxide: 25g;
- Silica flour: 25g;
- Portland cement type 42.5: 75g.

The mixture when properly homogenized is a flowable powder from which, after 24 hours of closure, various pellets were prepared at different compacting pressures: 30, 50, 100 bar.

After curing for one week, the pellets were desorbed in a muffle furnace at a temperature of 450°C for different times: 15-30-60 minutes.

The mercury, hydrocarbon and IPS content was determined on the desorbed pellets and the values obtained were compared with the initial soil content (sample T2).

**Table 7. Organic contaminant and mercury content of samples desorbed at 450°C against compaction pressure and desorption time.**

| Contaminant | m.u. | INITIAL REFERENCE | SAMPLES DESORBED AT 450°C | | | | | | | | |
|---|---|---|---|---|---|---|---|---|---|---|---|
| | | soil as such, sample T2 | Pressure 30 bar | | | Pressure 50 bar | | | Pressure 100 bar | | |
| | | | 30m | 45m | 60m | 30 m' | 45 m' | 60m | 30 m' | 45 m' | 60 m' |
| Mercury | mg/kgss | 33 | <1 | < 1 | < 1 | < 1 | <1 | < 1 | 1,35 | < 1 | <1 |
| Hydrocarbons | | | | | | | | | | | |
| C>12 | mg/kgss | 27.500 | 14 | 10 | 9 | 13 | < 10 | < 10 | 7 | 14 | 9 |
| APH | | | | | | | | | | | |
| Naphthalene | mg/kgss | 178,000 | < 1 | < 1 | < 1 | < 1 | < 1 | < 1 | < 1 | < 1 | < 1 |
| Phenanthrene | mg/kgss | 600 | < 1 | < 1 | < 1 | < 1 | < 1 | < 1 | < 1 | 1,3 | < 1 |
| Benzo(a)anthracene | mg/kgss | 2690 | < 1 | < 1 | < 1 | < 1 | < 1 | < 1 | < 1 | < 1 | < 1 |
| Benzo(a)pyrene | mg/kgss | 57 | < 1 | < 1 | < 1 | < 1 | < 1 | < 1 | < 1 | < 1 | < 1 |
| Dibenzoanthracene | mg/kgss | 78 | < 1 | < 1 | < 1 | < 1 | < 1 | < 1 | < 1 | 1.45 | < 1 |
| Benzo(b)fluoranthene | mg/kgss | 56 | < 1 | < 1 | < 1 | < 1 | < 1 | < 1 | < 1 | 1.1 | < 1 |

The results show very high organic contaminant and mercury removal efficiency even with a highly contaminated sample using high compacting pressure and relatively low retention time; hence mechanical compaction does not reduce the possibility of removing volatile components by thermal desorption, while it improves furnace control for both direct and indirect heating as there are substantially no fine powders in the treatment circuit, with evident more efficient maintenance and control of environmental parameters.

### Example 5:

12,600 g of a sediment in powder form, with moisture content of 24% verified by weight loss at 105°C, obtained by dehydration of a dredged sludge of an industrial canal of P. Marghera, Venice, with an initial dry matter content of 50.7%, contaminated with heavy metals and hydrocarbons and consisting mainly of silt, clay and dolomite particles of mean diameter 10 thousandths of a millimetre, were mixed in the manner of Example 1 with 800 g of calcium oxide and 2270 g of 42.5 Portland cement.

The final mixture weight is 15,750 g; a flowable granular powder is obtained. After 24 hours the mixture was compacted into briquettes using a cellular roller (sample S3/a briquettes).

After four days of curing, the briquettes were desorbed in a muffle furnace at 400°C for 10-20-30 minutes; the briquettes placed in a porcelain crucible were weighed before and after desorption, obtaining the following results:

| Sample | Time (mins) | No. briquettes | Initial weight (g) | Final weight (g) | Weight loss % |
|---|---|---|---|---|---|
| S3/a/d/10 | 10 | 10 | 30.33 | 25.30 | 16.6 |
| S3/a/d/20 | 20 | 10 | 29.59 | 24.15 | 18.4 |
| S3/a/d/30 | 30 | 15 | 46.45 | 3.9 | 18.4 |

The mercury, hydrocarbon and APH content were determined on the samples, together with the 24 hour water transfer test for the main metals present. The results are given in Tables 8 and 9.

**Table 8 Contaminants present:**

| | | | DESORBED SAMPLES S3/a/d | | | | |
|---|---|---|---|---|---|---|---|
| PARAMETERS | m.u. | S3/a briquettes as such | Briquettes 10min | Briquettes 20min | Briquettes 30min | Law decree 152/06 Table 1 attachment 5 part IV heading V Column B ind.al use | Law decree 152/06 Table 1 attachment 5 part IV heading V Column B res.al use |
| Residue at 105°C | % mass | 95 | 98.9 | 99.9 | 100.0 | | |
| Hydrocarbons C< 12 | mg/kgss | 27 | 9.8 | 9.4 | 2.5 | 10 | 250 |
| Hydrocarbons C> 12 | mg/kgss | 3075 | 226 | 12 | 11 | 50 | 750 |
| APH | | | | | | | |
| Naphthalene | mg/kgss | 22.9 | 2.0 | 1.11 | < 0.5 | | |
| Acenaphthilene | mg/kgss | 1.7 | < 0.5 | < 0.5 | < 0.5 | | |
| Acenaphthene | mg/kgss | 123 | 5.16 | 2.59 | < 0.5 | | |
| Anthracene | mg/kgss | 7.4 | 9.26 | < 0.5 | < 0.5 | | |
| Fluorene | mg/kgss | 153 | 1.13 | 1.12 | < 0.5 | | |
| Phenanthrene | mg/kgss | 237 | 124 | 1.52 | 0.68 | | |
| Fluoranthene | mg/kgss | 38 | 53.2 | < 0.5 | < 0.5 | | |
| Pyrene | mg/kgss | 70 | 28.5 | < 0.5 | < 0.5 | 5 | 50 |
| Benzo(a)anthracene | mg/kgss | 11.6 | 10.5 | 0.08 | < 0.05 | 0.5 | 10 |
| Chrysene | mg/kgss | 12.3 | 10.9 | < 0.5 | < 0.5 | 5 | 50 |
| Benzo(b)fluorathene | mg/kgss | 7.1 | 4.7 | 0.47 | < 0.05 | 0.5 | 10 |
| Benzo(k)fluorantene | mg/kgss | 2.8 | 6.3 | 0.32 | < 0.05 | 0.5 | 10 |
| Benzo(a)pyrene | mg/kgss | 2.9 | 3.3 | 0.08 | < 0.01 | 0.1 | 10 |
| Indeno(123cd)pyrene | mg/kgss | 4.4 | 2.87 | 0.33 | 0.01 | 0.1 | 5 |
| Dibenzo(ah)anthracene | mg/kgss | 1.2 | 0.92 | 0.14 | < 0.01 | 0.1 | 10 |
| Benzo(ghl)perylene | mg/kgss | 4.7 | 2.85 | 0.49 | 0.01 | 0.1 | 10 |
| Dibenzo(a.e)pyrene | mg/kgss | 1.1 | 0.24 | 0.02 | < 0.01 | 0.1 | 10 |
| Dibenzo(a.h)pyrene | mg/kgss | 0.3 | 0.08 | < 0.01 | < 0.01 | 0.1 | 10 |
| Dibenzo(a.i)pyrene | mg/kgss | 0.5 | 0.20 | 0.03 | < 0.01 | 0.1 | 10 |
| Dibenzo(a.i)pyrene | mg/kgss | 2.1 | 0.60 | 0.01 | < 0.01 | 0.1 | 10 |
| Sommatoria APH | mg/kgss | 128 | 71.66 | 1.97 | < 1 | 10 | 100 |
| TOTAL METALS | | | | | | | |
| Mercury | mg/kgss | 8.39 | < 0.5 | < 0.5 | < 0.5 | 1 | 5 |
| Lead | mg/kgss | 1016 | 1065 | 1038 | 1032 | 100 | 1000 |
| Cadmium | mg/kgss | 40 | 44.4 | 41.4 | 41.6 | 2 | 15 |
| Arsenic | mg/kgss | 405 | 339 | 345 | 341 | 20 | 50 |
| Copper | mg/kgss | 1671 | 1401 | 1356 | 1346 | 120 | 600 |
| Chromium tot. | mg/kgss | 64 | 63.3 | 72.4 | 72.1 | 150 | 800 |
| Nickel | mg/kgss | 19 | 24.7 | 26.8 | 26.1 | 120 | 500 |

**Table 9 24 hour water transfer test:**

| | | | DESORBED SAMPLES S3/a/d | | | |
|---|---|---|---|---|---|---|
| PARAMETER s | m.u. | S3/a briquettes as such. | Briquettes 20m | Briquettes 30m | Law decree 152/06 Table 2 attachment 5 part IV heading V Subterranean water | Enclosure 3 M.D.. 5 Feb 1998 |
| Copper | µg/l | 200 | < 5 | 6.6 | 1000 | 50 |
| Cadmium | µg/l | < 0.5 | < 0.5 | < 0.5 | 5 | 5 |
| Chromium | µg/l | 11 | 22 | 19 | 50 | 50 |
| Lead | µg/l | 1.11 | 2.5 | 3.7 | 10 | 50 |
| Arsenic | µg/l | 10.0 | < 1 | < 1 | 10 | 50 |
| Nickel | µg/l | 2.4 | < 1 | < 1 | 20 | 10 |

It can be seen that within 20 minutes the maximum weight loss is attained at 400°C, the organic contaminants (hydrocarbons and APH) and the mercury being virtual removed, their limits, within the limit of analytical sensitivity, being within the scheduled levels for residential soil.

Transfer to water from the desorbed samples improves to further reduce the copper and arsenic quantities. It has been shown that the heavy metals can be inerted and decontamination be achieved by removing the hydrocarbons, the carcionogenic APHs and the mercury from the sludge. The physical shape of the briquettes is maintained and powder is prevented. In addition, using the powder S3/a mixed with cement additives pellets were prepared (diameter 2 cm, height 1.3 mm) by compacting in a hydraulic press at 50 bar, as indicated in Ex. 4, on which, after a month of curing, the compression strength was tested by an ISTRON Dynamometer, obtaining a peak force value of 38 MPa, indicating good mechanical strength.

Example 6: Four days after compaction, 222.78 g of briquettes described in Ex. 5 were immersed for 24 hours in a 5 weight% aqueous sodium silicate solution (- 28% initial reference). After six months at ambient temperature in the laboratory, the briquettes show a mercury of 3.4% (dry at 100°C, 96.6%); ten briquettes of initial weight 28.07 g (sample S3/a/1) were desorbed in a muffle furnace at 400°C for 20 minutes, to obtain a final weight of 25.23 g with a weight loss of -10,1%. The briquettes were placed in water one hour to rehydrate, weight 30.59 g, with a weight increase of +9% compared with before desorption, dehydration in air at ambient temperature showing the following values:

| | | | | | |
|---|---|---|---|---|---|
| days 1 | gr. | 30.17 | (- 0.42 gr.) | - 1.37% | |
| days 3 | gr. | 27.32 | (- 3.27 gr.) | - 10.70% | |
| days 6 | gr. | 27.23 | (- 3.36 gr.) | - 11% | |
| days 9 | gr. | 27.20 | (- 3.39 gr.) | - 11.1% | (- 3% on initial weight before desorption) |

It will be noted that after hydration of the desorbed product, the briquette is more resistant to breakage, the weight loss (water and hydrocarbons) depending on the equilibrium of natural dehydration in air, which aligns towards 10% and is formed essential of the water of hydration of the stable cement compounds; the initial weight is substantially recovered by successive re-hydration and natural dehydration within about three days (sample S3/a/2/d/a).

A check on the water transfer, as shown in Table 10, is good, demonstrating inerting stability with time.

**Table 10 24 hour transfer:**

| Contaminant | Sample S3/a/1 briquettes | Sample S3/a/2/d/a desorbed briquettes | Law decree 152/06 Table 2 attachment 5 part IV heading V Subterranean water | Enclosure 3 M.D. 5 Feb 1998 |
|---|---|---|---|---|
| Metals | | | | |
| Arsenic | 10.6 | 4.9 | 10 | 50 |
| Chromium | <0.5 | <1 | 5 | 5 |
| Cyanide | 11 | 9.6 | 50 | 50 |
| Copper | 200 | <5 | 1000 | 50 |
| Lead | 1.1 | 2.9 | 10 | 50 |
| Nikel | 2.4 | <1 | 20 | 10 |
| Zn | ----- | 8.4 | 3000 | 3000 |
| final pH | | 7 | ----- | 55 ÷ 12 |

This example shows how the briquettes dehydrate natural in air at ambient temperature within a short time, less than three days, to achieve a dry content (weight loss at 105°C) greater than 95%, with evident benefits in the weight quantity for reuse (less water), while still maintaining good 24 hour water transfer, short dehydration time and low moisture level, enabling desorption with less water and hence less energy costs.

Example 7: 300 g of a dredged sludge of an industrial canal of P. Marghera, Venice (sample S2), with an initial dry matter content of 50.7% (initial water 49.3%) was mixed over 5 minutes with calcium oxide and variable quantities of 42.5 Portland cement in accordance with the following scheme:

| Symbol | Sediment S2 | Calcium oxide | Portland Cement 42.5 | Initial theoretical dry content |
|---|---|---|---|---|
| | g | g | g | % |
| F 23 | 300 | 30 | 30 | 59.5 |
| F 24 | 300 | 30 | 60 | 62.0 |
| F 25 | 300 | 30 | 90 | 64.8 |

For all the samples a spreadable tacky paste is obtained which does not consolidate immediately; after one day the sample FS23 is still a paste, white the samples FS24 and FS25 tend by mixing to agglomerate into coarse lumps, the dry matter (weight loss at 105°C) being 65.3% for F24, 69.5% for F25 and 63.27% for F23. The samples F24 and F25 were then ground in a laboratory knife mill, to give flowable powder.

After eight days the samples, all preserved in sealed bottles, show the following dry matter (weight loss at 105°C):
F23: 65.5% - slightly moist paste appearance, agglomerated, spreadable
F24: 69.6% - friable powder appearance, flowable
F25: 74.9% - friable powder appearance, flowable

A "cement setting" effect is visible, subtracting part of the water.

The powders were normally compacted into laboratory pellets (diameter 2cm, height 1.5cm, 10 g) at 50 bar pressure.

This example shows that even with long setting times, of maximum eight days, the "sludge" with high water content can be compacted with relatively low quantities of cement additives (30% by weight on the sludge). This eliminates the complicated, lengthy and costly dehydration plant technology for sludge, which is normally very difficult to sediment, drain and filter because of the silt and clay components. Hence cement addition enables hardening and mechanical compaction of powders obtained "from sludge".

After curing for one month in a sealed bottle, four pellets were desorbed at 400°C for 30 minutes in a muffle furnace, then rehydrated in water and dried in air.

These were then subjected to heavy metal transfer in water for 24 hours after curing for one month. The results are shown in the following Table 11.

**Table 11**

| Contaminant | m.u. | Samp. 24 | | Samp. 25 | |
|---|---|---|---|---|---|
| Metal | | as such | desorbed | as such | desorbed |
| Arsenic | µg/l | 8.3 | <0.2 | <0.2 | <0.2 |
| Cadmium | µg/l | 0.27 | <0.2 | 0.22 | <0.2 |
| Chromium | µg/l | <1 | 4.8 | <1 | 4.4 |
| Copper | µg/l | 271 | 1.6 | 139 | <1 |
| Lead | µg/l | 3.5 | <1 | <1 | <1 |
| Nickel | µg/l | 3.6 | <1 | 1.8 | <1 |

The values are comparable to those of Table 9 relative to "briquettes" obtained from dehydrated sludge dried naturally at length in air (76% dry matter - Example 5).

Compression strength (peak force) measurements were made on the pellets by the method of example 5.

The values are: F24 as such 11 (MPa) - F25 as such 17 (MPa).

Example 8: The same "sludge" (sample S2) as Example 7, dry matter 50.7%, was mixed with cement additives in accordance with the following scheme:

| Symbol | Sediment S2 | Calcium oxide | Portland Cemento 42.5 | sodium hydroxide | Tot. | Initial theoretic al dry content |
|---|---|---|---|---|---|---|
| | g | g. | G. | g. | g. | % |
| FS5 | 300 | 30 | 30 | ---- | 360 | 59.5 |
| FS7 | 200 | 10 | 20 | 1.0 | 231.0 | 57.0 |

After mixing and homogenizing for 10 minutes, all the samples appear as a spreadable paste, the dry matter, weight loss at 105°C, being:
FS5: 64.9% - FS7: 63%, showing, compared with the theoretical, that part of the water is subtracted from the cement compounds during setting.

Each sample was placed and uniformly distributed within an aluminium tray of surface 12x18 cm and positioned on a sand bath heated by a glass ceramic plate, the external temperature of the sand bath (T1) and the internal temperature of the sample (T1) being monitored with thermocouples and recorded, heating being set such that T2 always remains less than 100°C, the time being set at 30 minutes.

For reference, the same heating scheme was applied to a sludge sample (s2) of 50.7% dry matter without cement additives, the results being:

**Table 12**

| | SAMPLES | | | | | |
|---|---|---|---|---|---|---|
| Time minutes | FS5 | | FS7 | | S2 | |
| | T1 | T2 | T1 | T2 | T1 | T2 |
| 0 | 100 | 29 | 50 | 41 | 77 | 22 |
| 4 | 105 | 45 | 52 | 44 | 79 | 26 |
| 8 | 110 | 59 | 57 | 49 | 80 | 28 |
| 11 | 113 | 67 | 70 | 51 | 82 | 31 |
| 13 | 115 | 71 | 82 | 56 | 83 | 32 |
| 17 | 119 | 76 | 100 | 66 | 86 | 34 |
| 19 | 120 | 77 | 112 | 70 | 89 | 35 |
| 24 | 122 | 82 | - | - | 94 | 37 |
| 27 | 121 | 85 | 95 | 82 | 98 | 38 |
| 30 | 120 | 86 | 88 | 83 | 104 | 39 |
| 32 | - | - | - | - | 107 | 40 |
| 34 | - | | - | - | 110 | 41 |
| 36 | - | - | - | - | 114 | 42 |
| 38 | - | - | - | - | 119 | 43 |
| 40 | - | - | - | - | 123 | 45 |

After heating for 30 min, the samples FS/5 and FS/7 were mixed for 10 seconds in a laboratory knife mill, to obtain a granular powder (Photograph 2) with dry matter 71.5% for FS/5 and 70.0% for FS/7; whereas the sludge S2 remained a spreadable paste with dry matter 54.5%.

It was noted that the thermally accelerated "cementing" reaction consolidates the sludge mass into lumps even with a small quantity of cement additives, less than the preceding Example 7. It is however possible to obtain a mechanically compactable flowable powder with a small energy consumption, by using available industrial systems such as, for example, externally jacket-heated batch or continuous screw mixers.

Example 9: The pellets obtained from sample FS/7 of Example 8 were cured by drying natural in air in the laboratory at ambient temperature (20°C) and rehydrating after 8 days in water for 24 hours.

The weight changes for four pellets were:

| time (days) | Weight (g.) | Change % | Notes |
|---|---|---|---|
| 0 | 31.26 | 0 | drying |
| 1 | 30.51 | -2.4 | |
| 8 | 24.15 | -22.68 | |
| - | 30.91 | -1.1 | hydration in water |

It can be seen that the pellets dehydrate rapidly, and reacquire the lost water by subsequent hydration.

The air-dried pellets show 94.23% dry matter after 11 days of curing.
These were desorbed in a muffle furnace at 400°C for 20 minutes, then rehydrated by immersion for one hour in a 5 wt% aqueous sodium silicate solution and then left to dry in air in the laboratory.

The weight changes for four pellets from sample FS/7 were:

| Step | Weight g. | Change % |
|---|---|---|
| initial dope 1st drying in air | 22.75 | 0 |
| desorbimento | 19.96 | -12.3 |
| hydration solut. 5% sodium silicate | 27.97 | +22.7 |
| Drying in air | | |
| days 1 | 26.08 | +14.6 |
| days 3 | 22.81 | +0.2 |
| days 6 | 21.97 | -3.4 |
| days 9 | 21.90 | -3.7 |

No breakages were observed in the pellets subjected to said treatments. These results show that with modest cement quantities pellets and hence briquettes are obtained by mechanical compacting which rapidly dehydrate with a final dry matter greater than 90%,

They can easily adsorb inorganic salt solutions or possible polymers in emulsions or aqueous microsuspensions.

The rapid natural dehydration of the pellets and hence of the briquettes inerted with cement can unexpectedly be the most economical, rapid and environmentally compatible method for eliminating water from dredged sludge when consisting mainly of silt and clay with very fine particles as often happens in the industrial canals of the Venice lagoons.

Example 10: The pellets obtained from sample FS/5 of Example 8 according to the procedure of Example 4 in a hydraulic press to simulate "briquette" were subjected to dehydration, thermal desorption in a muffle furnace at 400°C for 20 minutes, rehydration and natural drying in air with curing for one month (samples FS/5/p/a/DR/a).

The 24 hour water transfer test (pellet 113) and mechanical compression (peak force) test were carried out on these pellets: the results are:
- Peak force: 7 (MPa)

**Table 13 24 hour water transfer**

| Contaminant metal | m.u. | Samp FS/5/p/a/DR/a | Limits | |
|---|---|---|---|---|
| | | | Law decree 152/06 Table 2 attachment 5 part IV heading V Subterranean water | Enclosure 3 M.D. 5 Feb 1998 |
| Arsenic | µg/l | 5.7 | 10 | 50 |
| Cadmium | µg/l | <1 | 5 | 5 |
| Nikel | µg/l | <1 | 20 | |
| Copper | µg/l | <5 | 1000 | 50 |
| Lead | µg/l | 2.9 | 10 | 50 |
| Chromium | µg/l | <5 | 50 | |
| Zinc | µg/l | 8.4 | 3000 | 3000 |

It was hence shown that the technology of thermally accelerating "cement setting" on sludge as such with about 50% of water is also applicable with low cement additive contents. The mechanical strength characteristics and dangerous metal inerting remained good.

Example 11: Ethyl acetate was added to 50g of briquettes prepared as described in Example 5 (sample S3/a) were broken down to obtain fragments not passing through a screen of 10 mm mesh, with 94.7% dry matter, to act as a hydrocarbon and organic compound extraction solvent in a liquid/solid weight ratio of three, the temperature being raised to the solvent boiling point under a reflux condenser (77°C); after one hour the system was cooled and the solid (fragments) separated from the solvent by fast filtration I(1st step); said operation was repeated under the same conditions with pure solvent (2nd step); finally the fragments were separated from the solvent and dried in air for 3 hours, to obtain 96.6% final dry matter. The sample (S3a/E) treated in this manner was analyzed for polycyclic aromatic hydrocarbon (APH) content, as shown in Table 14.

**Table 14. APH content after extraction with solvent**

| Contaminant APH | Samp, S3/a briquettes as such mg/Kgss | Samp. S3/a/E frag (2nd step) | | Law decree 152/06 Table 1 attachment 5 part IV heading V |
|---|---|---|---|---|
| APH | | frag mg/Kg | Removed % | |
| Naphthalene | 22.9 | 3.6 | 84.3 | |
| Acenaphthilene | 1.7 | 0.8 | 53.0 | |
| Acenaphthene | 123.0 | 37.9 | 69.2 | |
| Fluorene | 162.3 | 41.4 | 74.5 | |
| Phenanthrene | 250.6 | 67.6 | 73.0 | |
| Anthracene | 7.8 | 2.1 | 73.1 | |
| Fluoranthene | 38.0 | 9.2 | 75.8 | |
| CARCINOGENIC APH | | | | |
| Pyrene | 74.1 | 23.8 | 67.9 | 50 |
| Benzo(a)anthracene | 12.2 | 3.3 | 73.0 | 10 |
| Chrysene | 13.0 | 3.5 | 73.0 | 50 |
| Benzo(b)fluoranthene | 7.5 | 1.9 | 74.7 | 10 |
| Benzo(k)fluoranthene | 3.0 | 1.0 | 66.7 | 10 |
| Benzo(a)pyrene | 3.1 | 0.9 | 71.0 | 10 |
| Benzo(ghi)perylene | 5.0 | 2.0 | 60.0 | 10 |
| Indeno(123cd)terylene | 4.6 | 1.9 | 59.0 | 5 |
| Dibenzo(ah)anthracene | 1.3 | 0.5 | 61.5 | 10 |
| Dibenzo(a,e)pyrene | 2.2 | 1.0 | 55.0 | 10 |
| Dibenzo(a,h)pirene | 1.2 | 0.6 | 50.0 | 10 |
| Dibenzo(a,i)pyrene | 0.5 | 0.3 | 40.0 | 10 |
| Dibenzo(a,l)pyrene | 0.3 | 0.2 | 33.4 | 10 |
| Summation APH | 128 | 40.9 | 68.0 | 100 |

It will be noted that the final APH content enables the treated sludge to fall within the limits established in column B of Law decree 152/2006 for soil for commercial and industrial use. Normally the existing technologies relating to washing sludge or soil with solvents to extract organic contaminants require several steps, even four or five, for each of which the solid has to be separated from the liquid by filtration, decantation or centrifugation, these being difficult operations because of the presence of fine particles; a solid/sludge is normally obtained containing 50-60% of solvent, which entrains a part of the dissolved hydrocarbons for each step.

The briquettes or fragments are easily separable from the liquid, even by simple filtration through a mesh, without dogging, with high throughput and with low residual solvent content.

In addition the adsorption and desorption characteristics and the mechanical strength of the briquettes or fragments also enable semi-continuous column extraction techniques to be applied, wit h optimization of dimensions, temperatures, residence times and pressure to achieve best efficiency, including economical, according to the various initial contamination levels.

Example 12: 67.21 g of briquettes prepared as described in Example 5 (sample S3/a) were broken down to obtain fragments in accordance with Example 11 which was immersed in ethyl acetate (L/S = 1/1) at ambient temperature (20°C) for about 2 hours under light agitation, then filtered and weighed, measuring 76.11 g corresponding to 13.2 wt% of ethyl acetate adsorbed; the briquettes were then dried and analyzed for hydrocarbons and APH (1st step). A second and third step were carried out in the same manner. The results were as follows:
* 2nd step - weight 55.16 g; after extraction and solvent separation 62.76 g corresponding to 13.2 wt% of solvent adsorbed.
* 3rd step - weight 42.56 g; after extraction and solvent separation 48.79 g corresponding to 14.6 wt% of solvent adsorbed.

It will be noted that after each extraction step the adsorption percentage is practically constant. The residual organic contaminants after each extraction step are shown in the following Table 15,

| Organic contaminants | m.u. | S3/a briquettes as such | Extracted frag samples | | | Law decree 152/06 Table 1 attachment 5 part IV heading V |
|---|---|---|---|---|---|---|
| | | | 1° step | 2° step | 3° step | |
| Hydrocarbons C<12 | mg/Kgss | 27 | 10.6 | 1.4 | 1.1 | 250 |
| Hydrocarbons C>12 | mg/Kgss | 3075 | 1440 | 553.6 | 368 | 750 |
| Summation carcinogenic | mg/Kgss | 128 | 54.7 | 28.2 | 20.3 | 100 |

It was found that extracting with solvent at ambient temperature on fragments of dimensions greater than 10 mm enables considerable removal of organic contaminants to be achieved, to return the sediment to with the limits normally scheduled for commercial and industrial soils.

## Claims

1. A method for reclaiming soil, sediment and sludge dredged from watercourses contaminated by heavy metals and by dangerous and toxic organic compounds **characterised in that** the soil, sediment or sludge with a water content variable from 5% by weight to 60% by weight is subjected to the following steps:
- mixing and homogenizing at a temperature not exceeding 140°C for a time not exceeding two hours with cement binders in a quantity variable from 5% to 50% by weight of the soil, sediment or sludge, to obtain a flowable granular powder with an average diameter between 0.1 mm and 4 mm which is compacted mechanical into briquettes or pellets with a maximum volume of 500 cm³,
- a first curing step for cement setting and dehydration of the briquettes for a maximum time of nine days to attain a residual moisture content less than 15%,
- a second curing step for a maximum time of twentyeight days.

2. A method as claimed in claim 1, **characterised by** using as cement binders calcium oxide and cement in a ratio between 0 and 2.

3. A method as claimed in claim 1, **characterised by** using as cement binders quick setting cement and/or cement setting accelerators such as sodium hydroxide in a maximum quantity of 10% on the cement and/or additives such as silica flour, fluidifiers and superfluidifiers.

4. A method as claimed in claim 1, **characterised in that** after the mechanical compaction step the briquettes are subjected to shotblasting.

5. A method as claimed in claim 1, **characterised in that** if organic compounds and mercury are present these are removed by subjecting the briquettes, after the first curing step, to thermal desorption at a temperature of 300°C-450°C in a furnace with direct or indirect heating.

6. A method as claimed in claims 1 to 4, **characterised in that** if organic compounds are present these are removed by subjecting the briquettes, after the first curing step, to extraction with solvents at a temperature variable from ambient temperature to the solvent boiling point for a maximum contact time of three hours, with a liquid/solid weight ratio not exceeding 3.

7. A method as claimed in claim 1, **characterised by** using a continuous mechanical compactor with cellular rings counter-rotating at variable speed fed by a variable throughput screw feeder

8. A method as claimed in claim 1, **characterised in that** during the first curing step the briquettes are treated with aqueous solutions of soluble organic and inorganic salts such as alkali silicates, water-soluble polymers, polymer emulsions or water-soluble additives applied to cement mortars such as consolidators, hardeners, waterproofers.

9. A method as claimed in claim 1, **characterised in that** the thermal desorption step is applied to the briquettes after the first curing step with a maximum residence time sixty minutes in a continuous rotating furnace.

10. A method as claimed in claim 6, **characterised in that** the solvent extraction step is obtained with a continuous solvent flow in a column filled with briquettes or fragments.

11. A method as claimed in claim 1, **characterised in that** the mixing and homogenizing step is effected in batch mixers.

12. A method as claimed in claim 1, **characterised in that** the mixing and homogenizing step is effected in continuous mixers.

13. A method as claimed in claim 1, **characterised in that** the mixing and homogenizing step is thermally regulated by external heating.

14. A method as claimed in claim 13, **characterised by** using continuous equipment of screw type for heating.

15. A method as claimed in claims 1 to 5, **characterised in that** during the organic contaminant extraction step, ethyl acetate, acetone, petroleum ether, hexane, cyclohexane, dichloromethane or their mixtures are used.

16. A method as claimed in claim 5, **characterised by** repeating the extraction step several times.
